# EUROPÄISCHE PATENTANMELDUNG

(11) **EP 2 862 664 A1**
(43) Veröffentlichungstag der Anmeldung: **22.04.2015**
(21) Anmeldenummer: 13188729.1
(22) Anmeldetag: 15.10.2013
(51) Int. Cl.: B23K 26/03, B23K 26/38

(54) **Optische Überwachung eines Bohrprozesses und Vorrichtung**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Kamenzky, Susanne, 10713 Berlin (DE); Münzer, Jan, 10439 Berlin (DE); Piegert, Sebastian, 10777 Berlin (DE); Thomaidis, Dimitrios, 14197 Berlin (DE)

(57) **Zusammenfassung**

Durch die optische Überwachung (22) eines Laserbohrprozesses kann die Entstehung von schmelzflüssigen Phasen vermieden werden, so dass Anschmelzungen oder Risse in einem Schichtsystem (1) vermieden werden.

## Beschreibung

Die Erfindung betrifft die optische Überwachung eines Bohrprozesses, bei dem im Trennbereich Schmelzphasen oder ein Plasma entstehen können, sowie eine Vorrichtung.

Das Bohren mittels Laserstrahl oder Elektronen ist ein nichtspanendes Bearbeitungsverfahren, bei dem mittels Strahlung lokal so viel Energie in das Werkstück eingebracht wird, dass der Werkstoff ionisiert und verdampft.

Der ionisierte Dampf wird durch den unterschiedlichen Druck zwischen der Umgebung und dem Ort der Bohrung beschleunigt und somit aus der Bohrung entfernt. Ein Aufschmelzen des Materials im Randbereich der Bohrung ist dabei nicht erwünscht, da die Schmelze im Bereich der Bohrung zu flüssigen Korngrenzen, und damit zu Rissen im Grundwerkstoff führen könnte.

Bei Schichtsystemen mit äußeren keramischen Schichten kann es ebenfalls zum Abplatzen der TBC oder Anrissen während des Bohrprozesses kommen.

Es ist daher Aufgabe der Erfindung einen Bohrprozess aufzuweisen, der diese Probleme überwindet.

Die Aufgabe wird gelöst durch ein Verfahren gemäß Anspruch 1 und eine Vorrichtung gemäß Anspruch 6.

In den Unteransprüchen sind weitere vorteilhafte Maßnahmen aufgelistet, die beliebig miteinander kombiniert werden können, um weitere Vorteile zu erzielen.

Der Vorteil des Verfahrens bzw. der Vorrichtung besteht darin, dass der Bohrprozess überwacht und geregelt wird durch eine spezielle Optik.

Es zeigen
- Figur 1: ein Ablauf des Verfahrens und
- Figur 2: eine Vorrichtung für die Durchführung des Verfahrens.

Die Figuren und die Beschreibung stellen nur Ausführungsbeispiele der Erfindung dar.

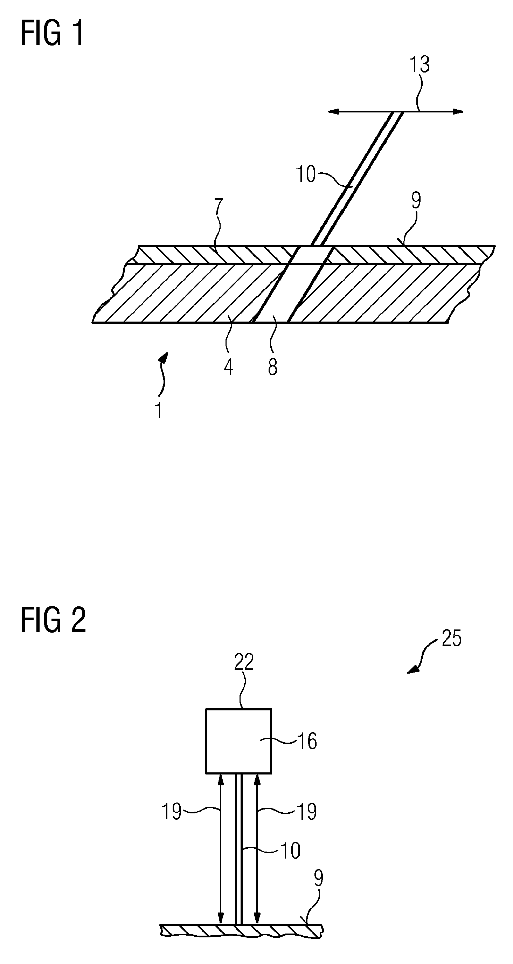

In Figur 1 ist ein Bauteil 1 gezeigt, in dem ein Loch 8, insbesondere ein Durchgangsloch 8 erzeugt werden soll.

Ein solches Bauteil 1 ist beispielsweise eine Turbinenschaufel mit einem nickelbasierten Substrat 4 und zumindest einer äußeren metallischen und/oder keramischen Schicht 7.

In Figur 1 sind eine äußere Schicht und/oder die äußeren Schichten 7 zusammen dargestellt. Bei Turbinenschaufeln ist die äußerste Schicht eine keramische Schicht.

Ein energiereicher Bearbeitungsstahl 10 wie ein Laserstrahl oder Elektronenstrahl wird auf die Oberfläche 9 des Substrats 4 oder der Schicht 7 gerichtet und ggf. in der Höhe oder in einer Richtung 13 verfahren.

Erfindungsgemäß wird das Verfahren durch eine Optik 22 überwacht und geregelt.

Für die schmelzflüssigen Phasen im Trennbereich des Lochs 8 wird eine Temperaturstrahlung 19 in einem Wellenlängenbereich emittiert, die sich von der Plasmastrahlung unterscheidet. Die Plasmastrahlung weist einen Wellenlängenbereich von 200nm bis 600nm auf und die Temperaturstrahlung beträgt > 1000nm. Tritt eine Temperaturstrahlung auf, wird der Energieeintrag in das Substrat 4 erhöht.

Der Energieeintrag zur Herstellung des Lochs 8 wird so geregelt, dass schmelzflüssige Phasen und damit Risse verkleinert bzw. vermindert werden. Dies liegt vorzugsweise bei einem Energieeintrag von 10⁷ - 10⁸ W/cm².

Als Stellgröße für den Regelkreis wird die Leistung des Bearbeitungsstrahls 10 oder die Pulsdauer oder die Pulsfrequenz der Bearbeitungsstrahlen 10 verwendet.

In Figur 2 ist eine solche Vorrichtung 25 gezeigt. Die Vorrichtung 25 umfasst ein Strahlgerät 16, wie einen Laser oder eine Elektronenstrahlvorrichtung, das zumindest einen Bearbeitungsstrahl 10 aussenden kann und gemäß Figur 1 eingesetzt wird.

Angekoppelt an das Strahlgerät 16 ist eine Optik 22, insbesondere eine Thermographiekamera, die zusammen mit dem Strahlgerät 16 verschwenkt werden kann.

Vorzugsweise ist die Optik 22 koaxial - angedeutet mit den Linien 19, die Temperaturstrahlen symbolisieren - zum Bearbeitungsstrahl 10 angeordnet.

## Patentansprüche

1. Verfahren
zur Herstellung von zumindest einem Loch (8) in einem Substrat (4) eines Bauteils (1)
mittels eines Bearbeitungsstrahls (10),
insbesondere eines Elektronenstrahls oder eines Laserstrahls,
bei dem zumindest ein Bearbeitungsstrahl (10) auf das Bauteil (1) trifft und
eine Optik (22) die Wellenlängen auftretender Strahlung detektiert und
bei dem beim Auftreten von schmelzflüssigen Phasen und deren Temperaturstrahlung (19) der Energieeintrag in das Substrat (4) des Bauteils (1) geregelt wird.

2. Verfahren nach Anspruch 1,
bei dem der Energieeintrag durch die Leistung eines Strahlgeräts (16),
das den zumindest einen Bearbeitungsstrahl (10) erzeugt, die Pulsdauer oder die Pulsfrequenz der Bearbeitungsstrahlen (10) geregelt wird.

3. Verfahren nach einem oder beiden der Ansprüche 1 oder 2, bei dem die Temperaturstrahlung (19) koaxial zum Bearbeitungsstrahl (10) gemessen wird.

4. Verfahren nach einem oder mehreren der Ansprüche 1 bis 3,
bei dem ab einer Temperaturstrahlung (19) ≥ 1000nm der Energieeintrag erhöht wird.

5. Verfahren nach einem oder mehreren der Ansprüche 1 bis 4,
bei dem der Energieeintrag bei 10⁷ - 10⁸W/cm² liegt.

6. Vorrichtung (25)
zur Herstellung eines Lochs (8) in einem Substrat (4) eines Bauteils (1),
die (25) ein Strahlgerät (16) aufweist,
insbesondere einen Laser,
das (16) zumindest einen Bearbeitungsstrahl (10) aussenden kann und
eine Optik (22),
die eine Temperatur des Bearbeitungsstrahls (10) messen oder bestimmen kann,
insbesondere im Fokusbereich des Bearbeitungsstrahls (10).

7. Vorrichtung nach Anspruch 6,
bei dem die Temperaturmessung koaxial zum Bearbeitungsstrahl (10) erfolgen kann.
